# EUROPÄISCHE PATENTSCHRIFT

(11) **EP 1 867 910 B1**
(45) Veröffentlichungstag und Bekanntmachung des Hinweises auf die Patenterteilung: **03.12.2008**
(21) Anmeldenummer: 07004504.2
(22) Anmeldetag: 06.03.2007
(51) Int. Cl.: F16L 59/14

(54) **Wärmegedämmtes Leitungsrohr**
Conduit pipe with thermal insulation
Conduite isolée thermiquement

(30) Priorität: 14.06.2006 DE 202006009337 U
(43) Veröffentlichungstag der Anmeldung: 19.12.2007
(73) Patentinhaber: BRUGG Rohr AG, Holding, 5200 Brugg (CH)
(72) Erfinder: Rudi, Roberto, 5107 Schinznach-Dorf (CH); Schneider, Robert, 8610 Uster (CH); Demuth, Roland, 5400 Ennetbaden (CH)

(56) Entgegenhaltungen:
- EP-A1- 0 897 788
- EP-A2- 0 960 723
- CH-A5- 673 694
- DE-U1- 20 303 698

## Beschreibung

Die Erfindung betrifft ein wärmegedämmtes Leitungsrohr nach dem Oberbegriff des Anspruchs 1.

Aus der EP 0 897 788 B1 ist ein wärmegedämmtes Leitungsrohr für den Einsatz in Nah- und Fernwärmenetzen, als Trink- und Abwasserleitungen sowie in zahlreichen weiteren Spezialbereichen bekannt, welches aus einem das Medium führenden Innenrohr aus Kunststoff, vorzugsweise aus vernetztem Polyethylen, einer das Innenrohr umgebenden Wärmedämmschicht auf der Basis von Polyurethanschaum sowie einem Außenmantel aus Kunststoff besteht, der mit einer Wellung versehen ist. Zwischen der Wärmedämmschicht und dem Außenmantel ist noch eine Folie aus Kunststoff vorgesehen.

Das bekannte Leitungsrohr ist gut biegbar und kann zu Ringen oder auf Trommeln gewickelt direkt auf die Baustelle geliefert werden. Aufgrund der guten Biegbarkeit kann das Leitungsrohr bei der Verlegung problemlos nahezu allen Terrain-Bedingungen angepaßt werden.

Bei dem bekannten Leitungsrohr, welches unter dem Markennamen "Calpex" auf dem Markt erhältlich ist, besteht die Wärmedämmschicht aus Polyurethanhartschaum, welcher dem Leitungsrohr hervorragende Wärmedämmeigenschaften verleiht. Nachteilig bei diesem Leitungsrohr ist, daß der Biegeradius relativ groß ist und z.B. bei dem kleinsten Rohrtyp auf 0,7 m begrenzt ist.

Der vorliegenden Erfindung liegt die Aufgabe zugrunde, das bekannte Leitungsrohr dahingehend zu verbessern, daß es auch um kleinere Radien gebogen werden kann, ohne daß die Folie einreißt. Insbesondere soll auch der Wärmedämmwert nicht zu sehr verschlechtert werden. Darüberhinaus soll sich auch die Quersteifigkeit des Leitungsrohres nicht verschlechtern.

Diese Aufgabe wird durch die kennzeichnenden Merkmale des Anspruchs 1 gelöst.

Weitere vorteilhafte Ausgestaltungen der Erfindung sind in den,Unteransprüchen erfaßt.

Der wesentliche Vorteil der Erfindung ist darin zu sehen, daß es gelungen ist, mit einfachen Mitteln ein hochflexibles wärmegedämmtes Leitungsrohr bereitzustellen, welches Wärmedämmeigenschaften aufweist, die nur geringfügig von den guten Wärmedämmeigenschaften des bekannten Leitungsrohres abweichen. Durch die veränderten Werte für die Wellung erhält das erfindungsgemäße Leitungsrohr eine Querstabilität, die derjenigen des bekannten Leitungsrohres entspricht, obwohl die Wärmedämmschicht bzw. die Zwischenschicht "weicher" als die Polyurethanschaumschicht des bekannten Leitungsrohres ist. Die "weiche" Zwischenschicht hat darüberhinaus noch den Vorteil, daß sie als Polsterschicht für die Folie dient, und ein Einreißen der Folie bei einer Biegung des Leitungsrohres vermieden wird.

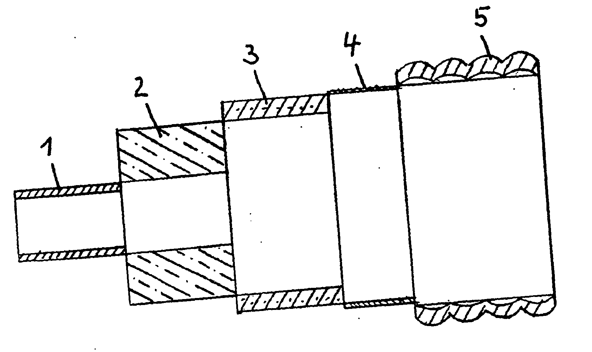

Die Erfindung ist anhand des in der einzigen Figur schematisch dargestellten Ausführungsbeispiels näher erläutert.

Die Figur zeigt eine seitliche Ansicht des erfindungsgemäßen Leitungsrohres, worin die einzelnen Elemente abgesetzt dargestellt sind.

Mit 1 ist ein Innenrohr bezeichnet, welches zum Transport des Mediums dient. Das Innenrohr 1 besteht vorteilhafterweise aus vernetztem Polyethylen. Es kann innerhalb seiner Wandung oder darüber eine Diffusionssperrschicht für Wasserdampf aufweisen. Die Diffusionssperrschicht kann eine Metallfolie oder aber eine geeignete Kunststofffolie sein. Anstelle des in der Figur dargestellten einzelnen Innenrohres können auch zwei oder mehrere Innenrohre vorgesehen sein. Das Innenrohr 1 bzw. die Innenrohre sind von einer Wärmedämmschicht 2 umgeben, welche aus einem teilweise offenzelligen Polyurethanschaum besteht. Der verwendete Polyurethanschaum ist etwas weicher als der beim Leitungsrohr nach dem Stand der Technik verwendete Polyurethanschaum. Die Wärmedämmschicht 2 ist von einer Zwischenschicht 3 umgeben, die aus einem elastisch verformbaren Schaumstoff besteht. Bevorzugt wird ein Polyethylenschaum. Aber auch ein Schaumstoff auf der Basis von Polyurethan kann eingesetzt werden.

Die Zwischenschicht 3 kann in Form eines Bandes auf die Wärmedämmschicht 2 aufgebracht werden u. z. entweder durch Längsauflegen oder durch Aufwickeln. Bevorzugt wird jedoch das Aufbringen der Zwischenschicht 3 durch Extrusion.

Über der Zwischenschicht 3 liegt eine Folie 4, die als Diffusionssperrschicht dient. Die Folie 4 hat die Aufgabe, das Eindringen von Wasserdampf in die Zwischenschicht 3 bzw. die Wärmedämmschicht 2 zu verhindern. Darüberhinaus soll sie das Austreten des in den Zellen des Schaumstoffes in den Schichten 2 und 3 befindlichen Treibmittels verhindern. Die Folie 4 besteht aus einem diffusionsdichten Kunststoff wie z. B. EVOH, sie kann aber auch aus Metall z. B. Aluminium, mit Copolymer beschichtetem Aluminium oder einer metallbedampften Kunststofffolie bestehen. Die Verwendung einer metallhaltigen Folie 4 hat noch den Vorteil, daß die Wärmedämmwirkung durch Verringerung der Strahlungsverluste verbessert wird.

Die Folie 4 sollte zumindest mit einer der benachbarten Schichten 3 oder 5 verklebt sein, um ein Einreißen der Folie 4 im Falle einer Biegung zu verhindern. Die Zwischenschicht 3 hat noch die Aufgabe, radiale Ausdehnungen des Innenrohres 1 aufzufangen und dadurch eine Beschädigung der Folien 4 zu verhindern.

Das Außenrohr 5 ist ein ringförmig gewelltes Kunststoffrohr, welches bevorzugt aus einem Polyethylen hoher Dichte (HDPE) besteht. Die Herstellung des Außenrohres 5 ist in der EP 0 897 788 beschrieben. Im Gegensatz zu dem bekannten Außenrohr ist die Wellung des Außenrohres 5 so ausgestaltet, daß eine höhere Quersteifigkeit erzielt werden kann, und somit höhere Verkehrslasten aufgenommen werden können.

Im Gegensatz zu dem bekannten Leitungsrohr, bei dem die Wärmedämmschicht aus Polyurethanhartschaum besteht, weist der weichere Schaum bei dem Leitungsrohr nach der Erfindung keine so hohe Querdrucksteifigkeit auf. Im Fall einer mechanischen Belastung z. B. im Falle einer Biegung oder eines in radialer Richtung wirkenden Kraft würde sich die Wanddicke der Wärmedämmschicht verringern, wodurch höhere Wärmeverluste an der Stelle der Krafteinwirkung auftreten.

Zu diesem Zweck ist der Wellenabstand geringer und die Welltiefe größer als beim bekannten Leitungsrohr.

Für die Wärmedämmschicht 2 wird ein Polyurethanschaum mit folgenden Eigenschaften eingesetzt:
- Dichte:: 45 - 65 kg/m³
- Bruchdehnung:: über 15 %
- Druckfestigkeit:: 50 bis 100 kPa

Die Zwischenschicht 3 besteht aus einem Polyethylenschaum, der durch Extrusion erzeugt wird.

Seine Eigenschaften sind:
- Dichte:: 20 - 40 kg/m³
- Bruchdehnung:: > 100 %
- Druckfestigkeit:: 5-30 kPa

Das Außenrohr 5 weist folgende Werte auf:
- Wanddicke:: 1,0 - 2,5 mm
- Wellenabstand:: 10 - 25 mm
- Welltiefe:: 5 - 12 mm
- Außendurchmesser:: 90 bis 180 mm

Die aufgezeigten Werte gelten für einen bestimmten Leitungsrohrtyp. Insbesondere die Werte für das Außenrohr 5 können sich von Leitungsrohrtyp zu Leitungsrohrtyp ändern.

## Patentansprüche

1. Wärmegedämmtes Leitungsrohr mit zumindest einem Innenrohr (1), einer das Innenrohr umgebenden Wärmedämmschicht (2) auf der Basis von Polyurethanschaum, einer die Wärmedämmschicht umgebenden Folie (4) sowie einem gewellten Außenrohr (5) aus thermoplastischem Kunststoff, **gekennzeichnet durch** folgende Merkmale:
a) der Wärmedämmstoff besteht aus einem teilweise offenzelligen Polyurethanschaum mit einer Bruchdehnung von mehr als 15 %,
b) zwischen der Wärmedämmschicht (2) und der Folie (4) ist eine elastisch verformbare Zwischenschicht (3) aus einem weichen Kunststoffschaum, die zumindest mit der Fotie verklebt (4) ist und
c) das Außenrohr (5) hat eine Wellung mit einer Welltiefe von 5/D bis 12/D und einen Wellenabstand von 10/D bis 25/D, wobei D der Außendurchmesser des Außenrohres (5) gemessen über den Wellenkuppen ist.

2. Wärmegedämmtes Leitungsrohr nach Anspruch 1, **dadurch gekennzeichnet, daß** die Zwischenschicht (3) aus Polyethylenschaum besteht.

3. Wärmegedämmtes Leitungsrohr nach einem der Ansprüche 1 oder 2, **dadurch gekennzeichnet, daß** die Zwischenschicht (3) eine extrudierte Schicht ist.

4. Wärmegedämmtes Leitungsrohr nach einem der Ansprüche 1 bis 3, **dadurch gekennzeichnet, daß** die Zwischenschicht (3) aus einem Band aus Schaumstoff besteht, welches längseinlaufend auf das Innenrohr (1) aufgelegt oder schraubenlinienförmig auf das Innenrohr (1) aufgewickelt ist.

5. Wärmegedämmtes Leitungsrohr nach Anspruch 1 oder 4, **dadurch gekennzeichnet, daß** das Verhältnis der Wanddicke der Wärmedämmschicht (2) und der Zwischenschicht (3) zwischen 10 und 2 liegt.

6. Wärmegedämmtes Leitungsrohr nach einem der Ansprüche 1 bis 5, **dadurch gekennzeichnet, daß** das Innenrohr (1) oder die Innenrohre aus vernetztem Polyethylen bestehen.

7. Wärmegedämmtes Leitungsrohr nach einem der Ansprüche 1 bis 6, **dadurch gekennzeichnet, daß** das Außenrohr (5) aus Polyethylen hoher Dichte besteht.

8. Wärmegedämmtes Leitungsrohr nach einem der Ansprüche 1 bis 7, **dadurch gekennzeichnet, daß** die Folie (4) permeationsdicht für Wasser, Wasserdampf und Treibmittel ist.

9. Wärmegedämmtes Leitungsrohr nach Anspruch 8, **dadurch gekennzeichnet, daß** die Folie (4) eine Aluminiumfolie ist, die zumindest an einer Seite eine Copolymerschicht aufweist.

10. Wärmegedämmtes Leitungsrohr nach Anspruch 8, **dadurch gekennzeichnet, daß** die Folie (4) eine metallbedampfte Kunststofffolie ist.

## Claims

1. A thermally insulated pipe having at least one inner pipe (1), a thermal-insulation layer (2) based on polyurethane foam surrounding the inner pipe, a foil (4) surrounding the thermal-insulation layer, and a corrugated outer pipe (5) fabricated from a thermoplastic plastic, wherein
a) the thermal insulation consists of partially open-celled, polyurethane foam having an elongation at break exceeding 15 %,
b) an elastically deformable intermediate layer (3) consisting of a soft, plastic foam between the thermal-insulation layer (2) and the foil (4) that is bonded to at least the foil (4), and
c) the outer pipe (5) is corrugated, with a corrugation depth of 5/D to 12/D and a corrugation spacing of 10/D to 25/D, where D is the outer diameter of the outer pipe (5), measured across the crests of its corrugations.

2. A thermally insulated pipe according to claim 1, wherein the intermediate layer (3) consists of polyethylene foam.

3. A thermally insulated pipe according to either claim 1 or claim 2, wherein the intermediate layer (3) is extruded.

4. A thermally insulated pipe according to one of claims 1 - 3, wherein the intermediate layer (3) consists of a foam tape lain out along the length of the inner pipe (1), or helically wound around the inner pipe (1).

5. A thermally insulated pipe according to claim 1 or claim 4, wherein the ratio of the wall thickness of the thermal-insulation layer (2) to that of the intermediate layer (3) falls within the range 10 to 2.

6. A thermally insulated pipe according to one of claims 1 - 5, wherein the inner pipe (1), or inner pipes, consists/consist, of cross-linked polyethylene.

7. A thermally insulated pipe according to one of claims 1 - 6, wherein the outer pipe (5) consists of high-density polyethylene.

8. A thermally insulated pipe according to one of claims 1 - 7, wherein the foil (4) is impervious to water, water vapour, and propellants.

9. A thermally insulated pipe according to claim 8, wherein the foil (4) is aluminium foil having a copolymer coating on at least one side thereof.

10. A thermally insulated pipe according to claim 8, wherein the foil (4) is a plastic foil having an evaporated-metal coating thereon.

## Revendications

1. Conduit calorifugé comprenant au moins un tube intérieur (1), une couche calorifuge (2) entourant le tube intérieur, à base de mousse de polyuréthanne, une feuille (4) entourant la couche calorifuge ainsi qu'un tube extérieur ondulé (5) en matière plastique thermoplastique, **caractérisé par** les caractéristiques suivantes :
a) la matière calorifuge est constituée d'une mousse de polyuréthanne, en partie à alvéoles ouvertes, ayant un allongement à la rupture de plus de 15%,
b) une couche intermédiaire (3) élastiquement déformable, en mousse synthétique molle, qui est collée au moins à la feuille (4), est présente entre la couche calorifuge (2) et la feuille (4) et
c) le tube extérieur (5) présente une ondulation ayant une profondeur d'ondulation de 5/D à 12/D et un écart entre les ondulations de 10/D à 25/D, D étant le diamètre extérieur du tube extérieur (5), mesuré sur les crêtes des ondulations.

2. Conduit calorifugé selon la revendication 1, **caractérisé en ce que** la couche intermédiaire (3) est constituée de mousse de polyéthylène.

3. Conduit calorifugé selon l'une quelconque des revendications 1 ou 2, **caractérisé en ce que** la couche intermédiaire (3) est une couche extrudée.

4. Conduit calorifugé selon l'une quelconque des revendications 1 à 3, **caractérisé en ce que** la couche intermédiaire (3) est constituée d'une bande de mousse synthétique, laquelle est posée sur le tube intérieur (1) par introduction longitudinale ou enroulée sur le tube intérieur (1) en forme d'hélice.

5. Conduit calorifugé selon la revendication 1 ou 4, **caractérisé en ce que** le rapport de l'épaisseur de paroi de la couche calorifuge (2) et de la couche intermédiaire (3) est compris entre 10 et 2.

6. Conduit calorifugé selon l'une quelconque des revendications 1 à 5, **caractérisé en ce que** le tube intérieur (1) ou les tubes intérieurs est (sont) constitué(s) de polyéthylène réticulé.

7. Conduit calorifugé selon l'une quelconque des revendications 1 à 6, **caractérisé en ce que** le tube extérieur (5) est constitué de polyéthylène de densité élevée.

8. Conduit calorifugé selon l'une quelconque des revendications 1 à 7, **caractérisé en ce que** la feuille (4) est étanche à la perméation pour l'eau, la vapeur d'eau et les agents moussants.

9. Conduit calorifugé selon la revendication 8, **caractérisé en ce que** la feuille (4) est une feuille d'aluminium qui présente une couche de copolymère tout du moins sur un côté.

10. Conduit calorifugé selon la revendication 8, **caractérisé en ce que** la feuille (4) est une feuille en matière plastique métallisée.
